# EUROPEAN PATENT SPECIFICATION

(11) **EP 1 271 116 B1**
(45) Date of publication and mention of the grant of the patent: **18.04.2007**
(21) Application number: 02380129.3
(22) Date of filing: 17.06.2002
(51) Int. Cl.: G01K 1/08

(54) **Clinical thermometer**
Klinisches Thermometer
Thermomètre médical

(30) Priority: 20.06.2001 ES 200101596 U
(43) Date of publication of application: 02.01.2003
(73) Proprietor: Biotap, S.L., 08360 Canet de Mar (Barcelona) (ES)
(72) Inventor: Moreno Torres, Rafael, 08360 Canet de Mar (Barcelona) (ES)
(74) Representative: Durán Moya, Carlos

(56) References cited:
- CH-A- 684 128
- DE-A- 2 622 196
- US-A- 3 190 436
- PATENT ABSTRACTS OF JAPAN vol. 008, no. 082 (P-268), 14 April 1984 (1984-04-14) & JP 59 000633 A (TERUMO KK), 5 January 1984 (1984-01-05)
- PATENT ABSTRACTS OF JAPAN vol. 014, no. 340 (P-1080), 23 July 1990 (1990-07-23) & JP 02 118423 A (SEFUTEE KK), 2 May 1990 (1990-05-02)

## Description

The present invention relates to an improved clinical thermometer which provides considerable characteristics of novelty and inventive activity with respect to currently known thermometers.

The advantages of the present invention over currently known clinical thermometers lie in a reduction in the risk of breakage of the thermometer by dropping and, in the event of breakage, prevention of leakage of the mercury of the thermometer, which is difficult to recover and represents a contaminant.

As is known, glass and mercury thermometers have been used routinely for more than 200 years and are considered the thermometers of reference since they are those which are most trusted by the user, owing to their accuracy and precision. The use of a glass and mercury thermometer does not entail any risk to the user since the mercury is not in direct contact with the skin at any time.

However, the development of environmental awareness has led to consideration of the harmful effect on health of heavy metals in general and of mercury in particular, for which reason it is advantageous, from the contamination point of view, to prevent transfer of mercury to the environment, in the metal state or in salt form.

With mercury clinical thermometers, breakages often occur as a result of the thermometer slipping from the fingers whilst being shaken or handled, or rolling on a table or the like, or in other circumstances. In the event of breakage, the metal is scattered on the ground and is difficult to pick up.

US 3,190,436 discloses a thermometer with a protective sheath covering the whole thermometer, the sheath having a laminar, closed short free portion at an end for easying extraction of the sheath. The sheath fitting should be easily movable and does not effectively permit leakage of the mercury in case of breakage.

CH 684 128 A5 which document represents the nearest prior art discloses a thermometer with two sticked closed protective elements at each end which aim is to prevent leakage in case of breakage.

To achieve its objects, the present invention as defined by claim 1 comprises the fitting of a shock absorbing element such as silicone or latex tube over the reservoir which contains the mercury and optionally, on the opposite end, a second protective tube which provides additional safety since it reduces the risk of breakage, enables the thermometer to be gripped better, and absorbs any rear impacts.

The tubular element should closely encircle the outer surface of the mercury to prevent leakage of the metal in the event of breakage and should be thin so as not to alter the temperature reading appreciably.

According to the present invention, the tubular elements, both of the reservoir and of the opposite end, project for 2-3 mm; this considerably reduces the breakage rate due to falling, owing to its shock-absorbing effect. At the end comprising the mercury reservoir, the tubular element covers the region of the joint with the capillary tube and the region of the constriction (the retaining valve).

It should also be borne in mind that the application of the present invention achieves improved safety characteristics of the thermometer in use since, owing to the greater friction of the silicone or latex tubular elements, slippages of the thermometer during handling, particularly during shaking in order to lower the mercury column, are considerably reduced.

For a better understanding of the present invention, some drawings showing a preferred embodiment are appended by way of non-limiting example.

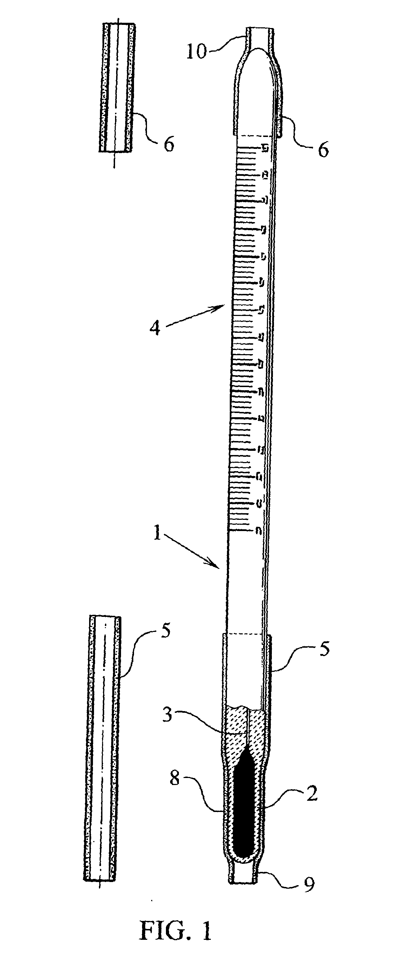

Figure 1 is an elevational view of a clinical thermometer according to the present invention, with the tubular elements fitted and removed, for a better understanding thereof.

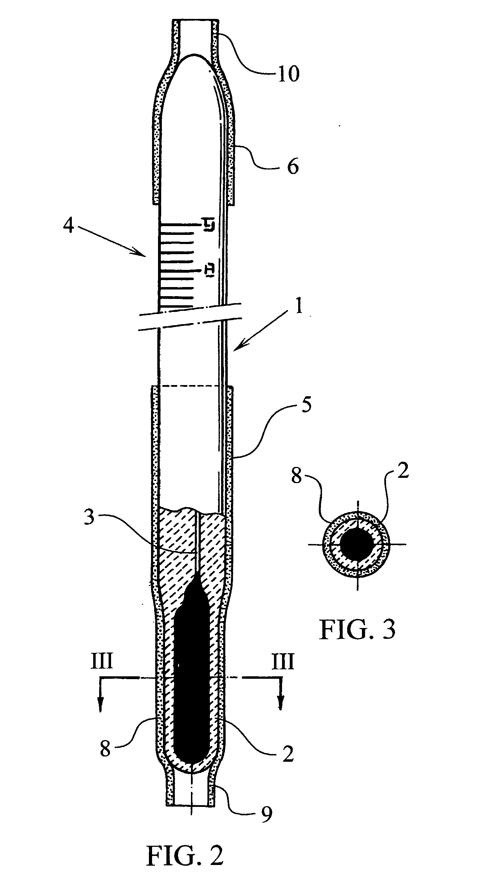

Figures 2 and 3 are respective sections through the reservoir portion and through the thermometer of the invention.
Figure 4 shows schematically the operation of the element enveloping the reservoir portion when a breakage of the thermometer occurs.
Figure 5 is an external view of a thermometer according to the invention which has undergone a breakage.

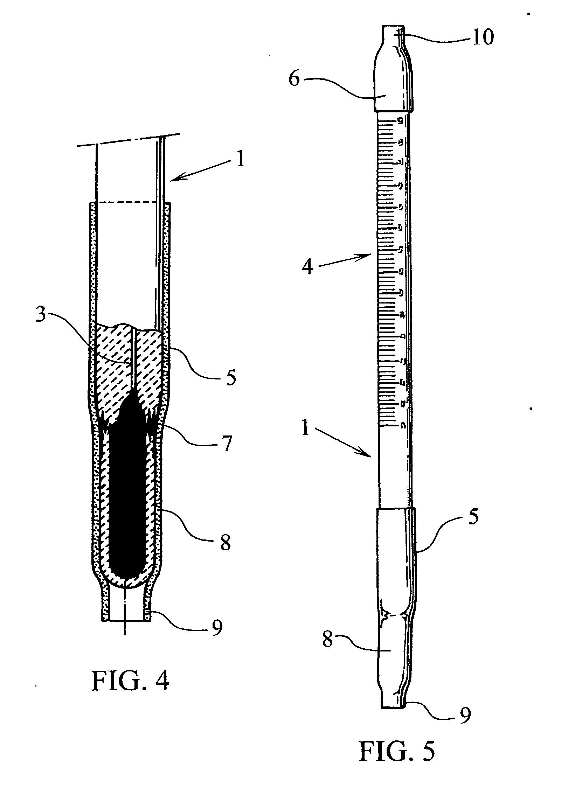

As can be appreciated from the drawings, the thermometer of the present invention comprises a conventional glass body 1 provided with a lower reservoir 2 holding a mass of mercury which can occupy a capillary tube 3 to a greater or lesser height according to temperature, enabling the temperature to be read on a graduated scale 4. The present invention provides for the arrangement of tubular elements 5 and 6 made of silicone, latex or the like, with shock-absorbing characteristics and a high coefficient of friction, the former element being fitted on a lower end, or reservoir end, of the thermometer, extending over the actual reservoir as well as over a joint portion or retaining valve, that is, a constriction. This arrangement prevents spillage of the mercury in the event of breakage of the reservoir, as shown in Figures 4 and 5, in which a breakage of the bulb 2 can be seen in the region 7, the mercury being contained by the outer tubular element 5. In this case, the tubular element 5 permits displacements of the lower portion 8 which includes the region in which the breakage has occurred, without leakage of the mercury to the exterior.

The tubular element 5 projects at its lower end as a short sleeve 9 extending to a length of about 2 or 3 mm, which permits better shock-absorption if the thermometer should fall.

The upper tubular element 6 also has a similar extension 10, that is, it projects for about 2 or 3 mm, for the same purpose explained above.

This arrangement protects the clinical thermometer against the scattering of glass and mercury in the event of breakage and, moreover, owing to its characteristics, reduces breakages of the thermometer to a very considerable extent owing to the shock-absorption of the tubular elements and to a reduction in the incidence of rolling of the thermometer on a flat surface.

## Claims

1. Clinical thermometer of the type which has a tubular glass element, comprising an internal capillary duct and a graduated scale, joined at its lower end to a reservoir holding mercury, with an intermediate constriction for retaining the mercury and a tubular, shock absorbing enveloping element on the end comprising the mercury reservoir, **characterized in that**:
the tubular element is extended beyond the thermometer itself by an open short free portion in order to provide an impact-absorbing region, and **in that** the tubular element fits well and tightly over the surface of the thermometer to prevent leakage of the mercury.

2. Clinical thermometer according to Claim 1, **characterized in that** it comprises another tubular, shock absorbing enveloping element on an end opposite to that comprising the mercury reservoir, the tubular fitting well and tightly over the surface of the thermometer to prevent leakage of the mercury and having a short free portion in order to provide an impact absorbing region.

3. Clinical thermometer according to either of the preceding claims, **characterized in that** said short free portion(s) are tubular.

4. Clinical thermometer according to claim 3, **characterized in that** the tubular elements are made of a resilient and flexible, shock-absorbing material with a high coefficient of friction.

5. Clinical thermometer according to Claim 4, **characterized in that** the tubular elements are silicone based.

6. Clinical thermometer according to Claim 4, **characterized in that** the tubular elements are made of a latex.

## Patentansprüche

1. Klinisches Thermometer von der Art, welches ein röhrenförmiges Giaselement besitzt, umfassend eine interne Kapillarleitung und eine Gradskala, welche an ihrem unteren Ende mit einem Quecksilber haltenden Reservoir mit einer dazwischen liegenden Verengung zum Zurückhalten des Quecksilbers verbunden ist, und ein röhrenförmiges, stoßdämpfendes, einhüllendes Element an dem das Quecksilberreservoir umfassenden Ende, **dadurch gekennzeichnet, dass** das röhrenförmige Element über das Thermometer selbst hinaus verlängert ist durch einen offenen, kurzen, freien Abschnitt, um einen stoßdämpfenden Bereich bereitzustellen, und dass das röhrenförmige Element gut und dicht über die Oberfläche des Thermometers passt, um ein Auslaufen des Quecksilbers zu verhindern.

2. Klinisches Thermometer nach Anspruch 1, **dadurch gekennzeichnet, dass** es ein weiteres röhrenförmiges, stoßdämpfendes, einhüllendes Element an einem Ende entgegengesetzt dem das Quecksilberreservoir umfassenden Ende umfasst, wobei das röhrenförmige Element gut und dicht über die Oberfläche des Thermometers passt, um ein Auslaufen des Quecksilbers zu verhindern, und einen kurzen, freien Abschnitt besitzt, um einen stoßdämpfenden Bereich bereitzustellen.

3. Klinisches Thermometer nach einem der vorhergehenden Ansprüche, **dadurch gekennzeichnet, dass** der (die) kurze(n) freie(n) Abschnitt(e) röhrenförmig ist (sind).

4. Klinisches Thermometer gemäß Anspruch 3, **dadurch gekennzeichnet, dass** die röhrenförmigen Elemente aus einem elastischen und flexiblen, stoßdämpfenden Material mit einem hohen Reibungskoeffizienten hergestellt sind.

5. Klinisches Thermometer gemäß Anspruch 4, **dadurch gekennzeichnet, dass** die röhrenförmigen Elemente Silikon basiert sind.

6. Klinisches Thermometer gemäß Anspruch 4, **dadurch gekennzeichnet, dass** die röhrenförmigen Elemente aus Latex hergestellt sind.

## Revendications

1. Thermomètre clinique du type qui présente un élément tubulaire en verre, comprenant un conduit capillaire interne et une échelle graduée, relié sur son extrémité inférieure à un réservoir contenant du mercure, avec un étranglement intermédiaire pour retenir le mercure et un élément enveloppant tubulaire amortissant les chocs sur l'extrémité comprenant le réservoir de mercure, **caractérisé en ce que** :
l'élément tubulaire s'étend au-delà du thermomètre lui-même avec une courte partie libre ouverte afin d'offrir une région amortissant les impacts,
et **en ce que** l'élément tubulaire s'adapte correctement et en ajustement serré sur la surface du thermomètre pour empêcher la fuite du mercure.

2. Thermomètre clinique selon la revendication 1, **caractérisé en ce qu'**il comprend un autre élément enveloppant tubulaire, amortissant les chocs sur une extrémité opposée à celle comprenant le réservoir de mercure, l'élément tubulaire s'adaptant correctement et en ajustement serré sur la surface du thermomètre pour empêcher la fuite du mercure et présentant une courte partie libre afin d'offrir une région amortissant les impacts.

3. Thermomètre clinique selon l'une quelconque des revendications précédentes, **caractérisé en ce que** lesdites courtes parties libres sont tubulaires.

4. Thermomètre clinique selon la revendication 3, **caractérisé en ce que** les éléments tubulaires sont réalisées à partir d'un matériau amortissant les chocs, élastique et souple présentant un coefficient de friction élevé.

5. Thermomètre clinique selon la revendication 4, **caractérisé en ce que** les éléments tubulaires sont à base de silicone.

6. Thermomètre clinique selon la revendication 4, **caractérisé en ce que** les éléments tubulaires sont en latex.
